# EUROPEAN PATENT SPECIFICATION

(11) **EP 0 535 122 B1**
(45) Date of publication and mention of the grant of the patent: **13.09.1995**
(21) Application number: 91912110.3
(22) Date of filing: 20.06.1991
(51) Int. Cl.: F02B 29/00, F01L 7/02, F02D 13/02

(54) **INTERNAL COMBUSTION ENGINE AND AN IMPROVED ROTARY INLET VALVE FOR USE THEREWITH**
BRENNKRAFTMASCHINE UND DAZUGEHÖRIGER VERBESSERTER DREHSCHIEBER
MOTEUR A COMBUSTION INTERNE ET SOUPAPE D'ADMISSION ROTATIVE AMELIOREE UTILISEE AVEC CELUI-CI

(30) Priority: 20.06.1990 GB 9013788
(43) Date of publication of application: 07.04.1993
(73) Proprietor: GROUP LOTUS LIMITED, Norwich Norfolk NR14 8EZ (GB)
(72) Inventor: BLUNDELL, David, William, Norfolk NR17 1YF (GB); WILSON, Neil, David, Norwich Norfolk NR16 1DG (GB); TURNER, James, William, Griffith, Northampton NNR OUY (GB)
(74) Representative: Mayes, Stuart David
(86) International application number: GB9100990
(87) International publication number: WO9119889

(56) References cited:
- EP-A- 0 194 503
- EP-A- 0 271 130
- DE-C- 1 141 490
- FR-A- 2 263 375
- GB-A- 100 761
- GB-A- 530 934
- US-A- 4 016 840
- US-A- 4 809 649
- PATENT ABSTRACTS OF JAPAN vol. 10, no. 163 (M-487)(2219) 11 June 1986, & JP-A-61 016256 (MAZDA K.K.) 24 January 1986

## Description

The invention relates to internal combustion engines and also to a rotary valve for use in internal combustion engines.

The invention can be used by many different types of engine (4 stroke, 2 stroke, rotary, etc.) although the specific description contained herein shall refer to 2-stroke engines only.

Conventional 2-stroke engines are "Crankcase scavenged". The fuel/air charge is induced into the crankcase as the piston rises up the cylinder, due to a pressure differential between that in the crankcase and atmospheric pressure. As the piston starts to descend, the inlet passage is closed by the piston and/or a reed valve and the trapped fuel/air mixture is compressed. Towards the bottom of its stroke, the piston opens the transfer ports and the compressed charge is transferred from the crankcase to the cylinder, scavenging exhausted gases from the last cycle out through the exhaust port to atmosphere before commencement of the compression stroke and subsequent combustion.

The main disadvantage of the method of charging described is that fuel/air mixture is used to scavenge the cylinder of exhaust gases and part of the fuel/air mixture is lost uncombusted through the exhaust port to atmosphere, increasing exhaust emissions, increasing fuel consumption and reducing potential power.

Further disadvantages are that the lubrication of the cylinder walls and the crankshaft and piston bearings relies on a "total loss" lubrication system, that is the lubricating oil is burnt with the fuel/air charge and expelled through the exhaust port to atmosphere. This again increases exhaust emissions, contaminates any potential exhaust catalytic converters and requires periodic checks to ensure that sufficient oil is available in its respective tank. In addition, the piston is unable to dissipate its heat from the crown via an oil "Squirt Jet", as is the case in most contemporary wet sump engines. Consequently the piston/cylinder bore clearance must be greater than that in the said "wet sump" engine to ensure sufficient clearances when the cylinder bore is cold (winter morning cold start) and the piston hot. The increased piston/cylinder bore clearance results in a noisy engine and potentially higher compression and expansion losses. The piston crown temperature is limited in a conventional two-stroke dry sump engine since no cooling is available.

A preferred embodiment of the present invention comprises a rotary valve. Known rotary valves comprise primarily two fundamental types, the "Aspin" type, in which the valve axis is parallel to the cylinder axis and the valve rotates uncovering inlet and, subsequently, exhaust ports in phase with the piston. The other concept is the "Cross" type in which the valve axis is perpendicular to the cylinder axis and the valve itself transmits both the inlet charge and the exhaust gas through its own body.

A rotary valve according to the prior art is described in EP 0112 069. The rotary valve described is adapted to control the flow of fuel to and exhaust gases from a cylinder of an internal combustion engine. EP 0112069 describes a split cylindrical rotary valve comprising two chambers, each of which has a port allowing communication of the chamber with a cylinder of the engine for a part of the engine cycle. The cylindrical rotary valve is rotated relative to the engine block and cylinder head in a timed manner with reference to the motion of the piston in the cylinder. Radial and lateral seals separate the cylindrical split valve from the cylinder head but remain stationary with respect thereto.

GB530934 and GB100761 both disclose a rotary valve having a sleeve rotating relative to an internal cylindrical member, the sleeve having apertures which align with apertures to passages in the cylindrical member in order that one of the passages may communicate with an internal combustion engine inlet port.

The present invention provides an internal combustion engine having: at least one working cylinder, an inlet port in the cylinder and inlet valve means connected to the inlet port comprising; a first innermost member of a cylindrical external configuration and having a plurality of fluid passages therein and a plurality of apertures allowing communication of each of the passages with the exterior of the first member, a sleeve surrounding the first member and having at least one aperture and means for rotating the sleeve relative to the first member about a common axis, wherein the aperture of the sleeve aligns with one or more of the apertures of the first member during a desired range of relative rotations to allow communication of a passage in the first member with the working cylinder via the inlet port, the sleeve sealing the passage from the working cylinder when the said apertures are not in alignment characterised in that means is provided to rotate the first member about the common axis.

The present invention provides a novel valve assembly having a plurality of passages which can each be used to deliver a gas or liquid or a mixture of both to a cylinder for a certain period in the engine cycle.

The first member can be rotated about the common axis to alter the timing of communication between the working cylinder and the passages in the first member or the inlet valve. Alternatively or additionally the first member can be rotated to alter the range of relative rotations between the sleeve and the first member during which the aperture in the sleeve allows communication of each of the passages in the first member with the working cylinder.

In a preferred embodiment the internal combustion engine of the invention further comprises measuring means to measure engine speed and the means to rotate the first member about the common axis rotates the first member in accordance with engine speed.

The inlet valve means can be used to alter with engine speed the relative amounts of fluid and/or gas and/or mixture delivered from the supply passages to the cylinder.

The internal combustion engine could also comprise measuring means to measure engine temperature in which case the means to rotate the first member about the common axis could rotate the first member in accordance with engine temperature and/or means to measure load on the engine in which case the means to rotate the first member about the common axis could rotate the first member in accordance with engine load.

Preferably the first member and the sleeve of the inlet valve means are located in a cavity defined in the cylinder head or cylinder block of the engine and an annular cavity is defined between the exterior of the sleeve and the cylinder head or cylinder block along a portion of the length of the sleeve, the sleeve and the first member having apertures which align for a range of rotational positions of the sleeve to allow communication between a passage in the first member and the annular cavity, and the said annular cavity communicates with means for supplying fuel and gas mixture, whereby the fuel and gas mixture is mixed in the annular cavity by turbulence caused by the rotation of the sleeve.

The turbulent mixing of the fuel and gas mixture aids combustion by ensuring efficient mixing.

Preferably the means for supplying fuel and gas mixture comprises a gas compressor and a fuel injector injecting fuel into the gas and preferably the fuel injector is positioned within the cylinder head or cylinder block such that it sprays fuel on to the sleeve of the inlet valve means.

The sleeve will be hot in operation of the engine since it is exposed to the combustion of the cylinder. The hot surface of the sleeve aids evaporation of the fuel.

Preferably scavenge gas is delivered to the cylinder through a first passage in the first member when the aperture in the first member associated with first passage aligns with an aperture in the sleeve and fuel and gas mixture is delivered to the cylinder through a second passage in the first member when the aperture in the first member associated with the second passage aligns with an aperture in the sleeve.

The invention provides a rotary valve which can deliver both pure gas and fuel and gas mixture separately through one cylinder port. Thus one engine port can be used to provide both pure air for scavenging purposes and fuel and gas mixture for both the final scavenging necessary and also for combustion.

Since both the pressurised air and the fuel and gas mixture can be supplied through one port in the cylinder, the transfer ports of traditional two-stroke engines are no longer necessary. This has the further advantage that a wet sump crankcase lubrication system as used in 4-stroke engines can be employed since the lubricating oil need not be burnt with the fuel and gas charge as has been normal with two-stroke engines. Obviously, engine emissions are beneficially altered by using a supply of fuel and gas mixture uncontaminated by lubricating oil.

In one embodiment the gas and fuel mixture supplied is an air and fuel mixture. This is conventional.

In an alternative embodiment the gas and fuel mixture supplied to the cylinder is a mixture of fuel, air and combusted gases exhausted from the working cylinder. The use of hot exhaust gas as a portion of the total mixture improves atomisation and vaporisation of the fuel and can also be beneficial in reducing engine emissions.

Preferably the internal combustion engine comprises: means for supplying gas under pressure, means for supplying a fuel and gas mixture, exhaust valve means which operates in timed relationship to the engine cycle to allow gases to flow out of the working cylinder for a portion of the engine cycle, and preferably the inlet valve means operates in timed relationship to the engine cycle and connects the working cylinder with the means for supplying gas under pressure at a first point of the engine cycle and connects the cylinder with the means for supplying fuel and gas mixture at a second later point in the engine cycle, the inlet valve means also operating to connect the means for supplying gas under pressure with the working cylinder for at least a part of the period during which the exhaust valve means allows gases to flow out of the working cylinder such that the gas under pressure supplied to the cylinder drives combusted gases from the working cylinder.

The present invention thus provides an internal combustion engine in which a supply of gas is used to assist the scavenging of combusted gases from the cylinder. This is beneficial to emissions and fuel economy.

Preferably the engine operates by the two-stroke cycle and the exhaust valve means comprises an exhaust port in the cylindrical wall of the working cylinder spaced axially along the working cylinder from the inlet valve means, which exhaust port is opened and closed by the piston during reciprocal motion thereof.

Preferably the inlet valve means supplies both the gas under pressure and the fuel and gas mixture to the cylinder via a single port in the cylinder. By supplying both gas under pressure and fuel and gas mixture via one inlet port the number of ports in the engine is kept to two, avoiding the need for additional ports which decrease engine efficiency.

Preferably the valve means simultaneously supplies to the cylinder for a portion of the cycle of the engine both gas under pressure and fuel and gas mixture.

The successive introduction of pressurised air and then both pressurised air and gas and fuel mixture is beneficial to charge stratification and therefore assists combustion.

The invention is suited to an internal combustion engine which operates by a 2-stroke cycle and wherein the supply of gas under pressure is connected to the cylinder during a downstroke of a piston moving within the cylinder whilst an exhaust port opening to atmosphere is open to the cylinder such that the combusted gases are scavenged from the cylinder.

Preferred embodiments of the present invention will now be described with reference to the accompanying drawings, in which;
Figure 1 is a schematic representation of one embodiment of the invention.
Figures 2A to 6A are simplified diagrammatic cross-sections of a piston and cylinder arrangement at different stages during a cycle.
Figures 2B to 6B are simplified diagrammatic cross-sections of a piston and cylinder arrangement according to the invention showing the same sequence as Figures 2A to 6A but with the arrangement adjusted to account for a change in engine speed and/or load and/or temperature.
Figure 7 shows a transverse cross-sectional view of a rotary valve of a second embodiment of the invention.
Figure 8 shows an axial cross-sectional view of the rotary valve of figure 7.

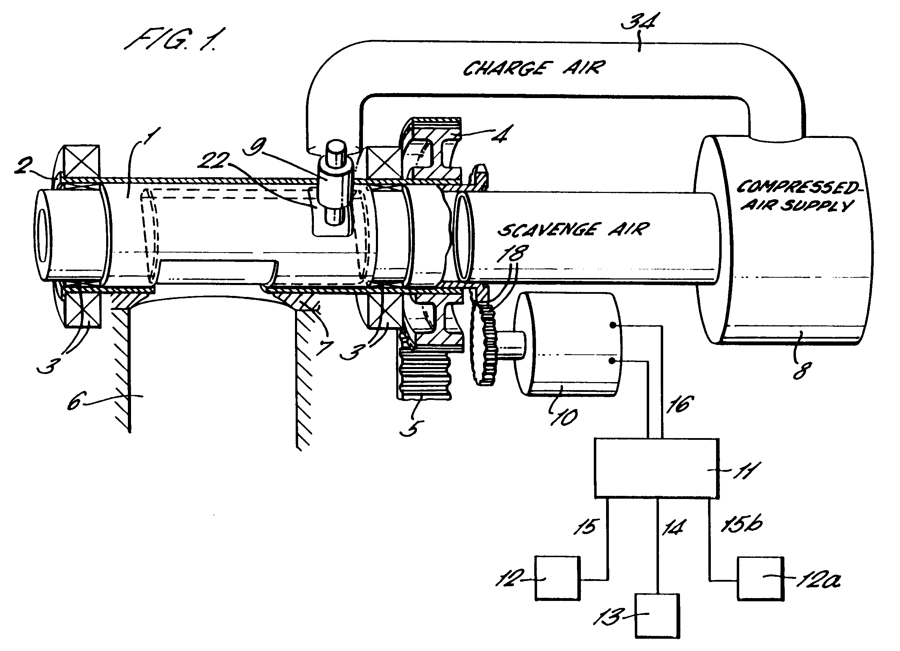

Figure 1 shows a first member 1, a sleeve 2, bearings 3, a pulley 4, a belt 5 driven from the engine output crankshaft (not shown), a cylinder 6, a cylinder head 7, a compressor 8, a fuel injector 9, a servo-motor 10, a control unit 11, a speed sensor 12, a pressure sensor 12a and temperature sensor 13.

The temperature sensor 13 is disposed in the engine cooling system to measure the coolant temperature therein. The sensor sends a signal via a line 14 to the control unit 11.

The engine speed sensor 12 measures the rotational speed of the engine in which the arrangement is present. The engine speed sensor 12 sends a signal to the control unit 11 via line 15.

The pressure sensor 12a measures inlet manifold pressure and sends a signal corresponding thereto via the line 15b to the control unit 11. The sensor is an option considered by the applicant.

The control unit 11 compares and combines the signals it receives in accordance with pre-programmed instructions. The control unit 11 sends an instructions signal to the servo-motor 10 via lines 16. The signal instructs the servo motor to rotate the first member 1 to a required angle with regard to an arbitrary fixed reference via gears 18.

In the preferred embodiment the first member 1 is cylindrical and is partitioned into two passages 30 and 31, to segregate fuel/air or "charge" mixture from the pressurised "scavenge" air. In a first embodiment the first member has two apertures 26 and 27 adjacent the inlet port of the combustion chamber. The first member also has an aperture 23 which allows (when uncovered) pressurised air to be delivered into passage 31.

Pressurised "scavenge" air is fed axially along the first member through one passage 30 thereof from a compressor. The compressor could be a supercharger or turbocharger or compression of the air could take place in the crankcase. The pressurised air is contained within passage 30 of the first member until the aperture 25 of the sleeve 2 coincides with the aperture 26 of the first member 1 and the inlet port 24 combustion chamber, typically 113^{o} after top dead centre. Upon reaching this condition fresh "scavenge" air, ie. without the addition of fuel, is transferred from the compressed gas source, via the first member 1, to the cylinder 6 where it commences the cylinder scavenging cycle, forcing burnt gasses to atmosphere through the exhaust port 28.

After the sleeve 2 rotates approximately a further 30^{o} an aperture 22 of the sleeve 2 and an aperture 23 leading to the second passage 31 of the first member 1 coincide and compressed air is delivered into the second passage 31 from an external source, via the passage 34 from the compressed air supply 8. The pressurized air is introduced into the passage 31 of the first member and fuel is mixed therewith, such fuel being sprayed by the fuel injector 9 into the airstream passing thereby.

At approximately 165^{o} ATDC, the aperture 25 in the sleeve coincides with the aperture 27 in the first member and the fuel/air mixture is fed into the cylinder. As the sleeve continues to rotate, the flow of "scavenge" air is gradually reduced by reduction of the area of the aperture 26 open to the cylinder 6, until approx 230^{o} ATDC when the sleeve 2 closes the "scavenge" air aperture 26, leaving only the "charge" air aperture 27 open. It is the intention of this invention that the positioning of the "charge" air aperture 27 should provide a degree of charge "Stratification" ie. a relatively rich mixture predominantly about the ignition source.

At approximately 250^{o} ATDC the "charge" air aperture 27 in the first member is completely closed by the sleeve 2. When the piston closes the exhaust port 28 the compression stroke begins.

It should be noted that the positions of rotation of the engine referred to above and in the drawings in terms of degrees after top dead centre are purely illustrative and the timing of the opening of apertures 26 and 27 to the cylinder 6 can vary substantially. Indeed the preferred embodiment of the invention allows the timing to be varied, as described below.

By rotation of the first member 1, the angle/area of the fuel/air aperture 27 that is open to the combustion chamber can be reduced/increased. It is therefore proposed that this invention incorporates a servo motor or similar driven by a control unit comprising electronic circuiting which compares and combines signals it receives from speed, temperature and pressure sensors, in accordance with pre-programmed instructions. This "variable valve timing" would enable the fuel requirements to be optimised for different running conditions, ie. engine speed/load/temperature.

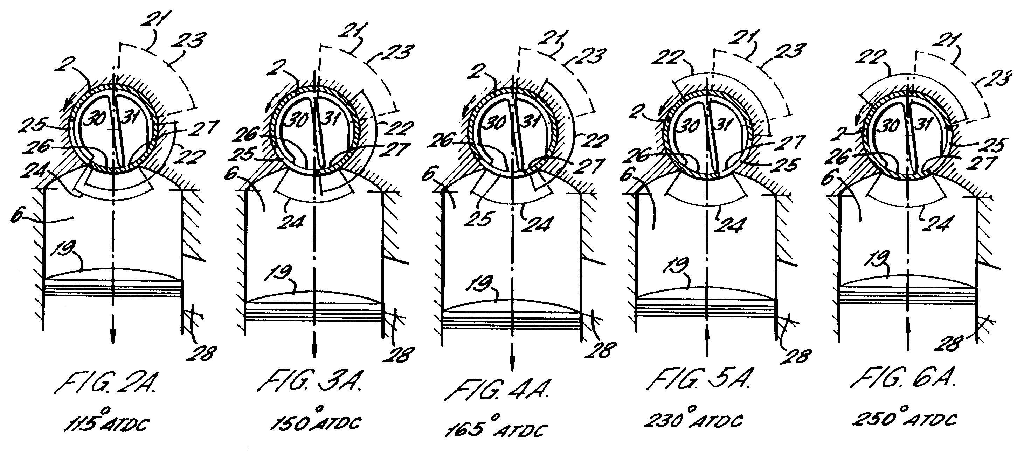

Referring to figures 2A to 6A the method of operation of the invention during an engine cycle can be seen. Figure 2A shows a piston 19, the cylinder 6, an inlet aperture 21 in the cylinder head, a sleeve inlet aperture 22, a first member inlet aperture 23, a cylinder head "transfer" aperture 24, a rotatable member transfer aperture 25, a first member scavenge aperture 26, a first member charge transfer aperture 27 and an exhaust aperture 28. The figure is simplified for clarity and does not show the servo-motor 10, the control unit 11, the electrical sensors 12 and 13, the gears 18 or the pulley. The figures show a sequence for low engine speed and/or low engine load operation.

Figure 2A shows the piston 19 at a point in the exhaust cycle where the cylinder pressure has decayed to a pressure equal to or just below that of the "charge" pressure, at approx 115^{o} after top dead centre (ATDC). The sleeve is being rotated anti-clockwise by the belt 5. In Figure 2A the leading edge of the transfer aperture 25 in the sleeve is flush with the leading edges of both the scavenge transfer aperture 26 in the first member and the cylinder head transfer aperture 24. The first member inlet aperture 23 is covered by the sleeve 2. The scavenge passage 30 of the delivery member contains pressurised air delivered from the compressed air supply 8. The fuel/air passage 31 is sealed from communication with the exterior of the first member 1 by the sleeve 2.

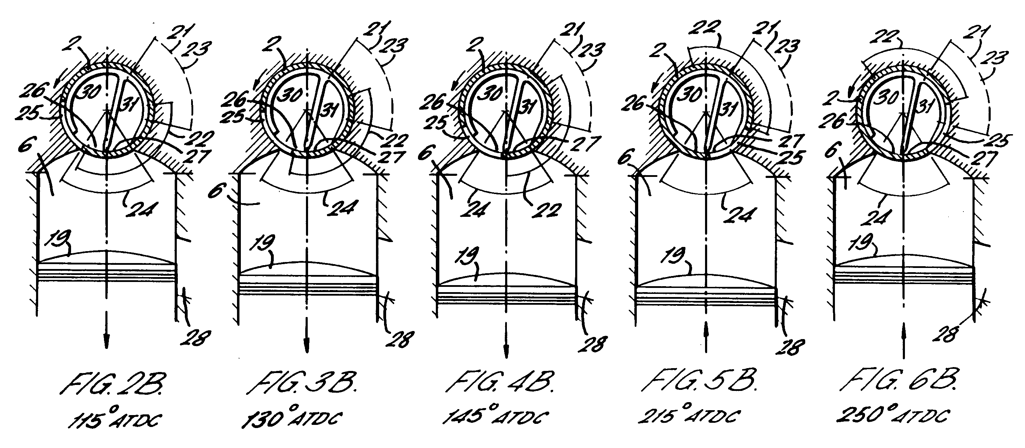

Figure 3A shows the piston 19 at a point in the scavenge cycle where the exhaust aperture 28 is still open and the sleeve 2 has rotated such that the leading edge has uncovered the aperture 26 in the first member to a point just prior to uncovering of the charge transfer aperture 27. The inlet aperture 23 is just uncovered by the sleeve inlet aperture 22 and pressurised air flows through the passage 34 to the passage 31 being mixed with fuel delivered by fuel injector 9. Typically this point occurs for low engine speed and/or load at a point approx 145^{o} ATDC. The passage 30 is in communication with the cylinder 6 and delivers air under pressure thereto to force out residual combusted gases. The fuel/air passage 31 is in communication via inlet aperture 23 with a supply of air under pressure to which fuel has been added by the fuel injector.

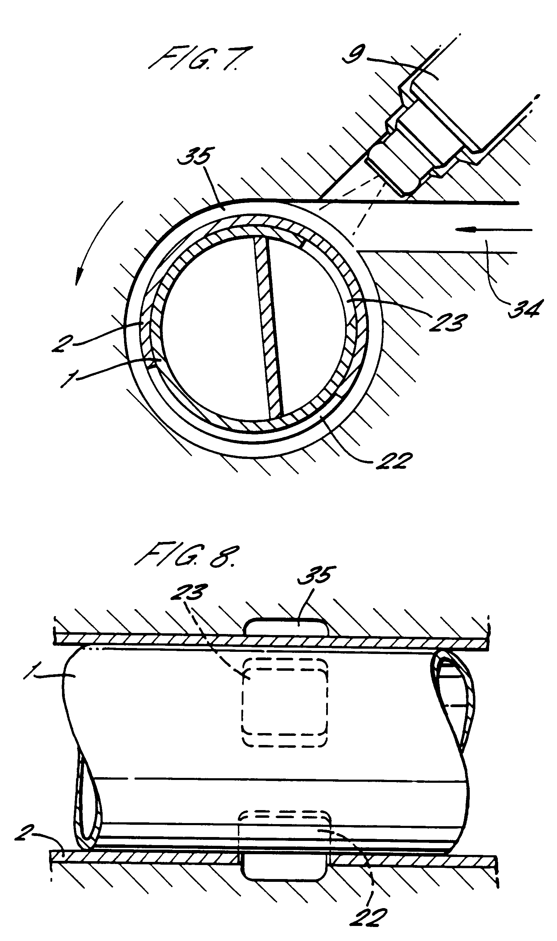

Figure 4A shows the piston 19 at a point approximately midway through the scavenge cycle and at the start of the charge induction cycle. The leading edge of the sleeve "transfer" aperture 25 is flush with the edge of the charge transfer aperture 27. The inlet aperture 23 connecting passage 31 to the supply of fuel/air mixture is uncovered by the sleeve member inlet aperture 22 and the fuel injector 9 has started its injection cycle. Typically this point occurs at approx 165^{o} ATDC.

Figure 5A shows the piston 19 at a point towards the end of the charge transfer cycle. The trailing edge of the sleeve transfer aperture 25 is flush with the edge of the first member charge transfer aperture 27. The first member inlet aperture 23 is fully open. Typically this point occurs at approx 230^{o} ATDC. The "scavenge" passage 30 is sealed and therefore ceases to deliver scavenging air under pressure to the cylinder 6. The fuel/air passage 31 is in communication with the cylinder 6 and delivers fuel/air mixture thereto.

Figure 6A shows the sleeve 2 rotated to seal both of the passages 30 and 31 from the cylinder 6. The passages remain sealed from the cylinder 6 until the sleeve again reaches the position of figure 2A, during which time the fuel/air mixture of cylinder 6 is compressed and then combusted.

The Figures 2A to 6A show operation of a rotary valve according to the invention in an engine operating at low loads and/or low speeds. The angle through which the sleeve rotates between opening and closing the said aperture 26 is greater than the angle through which the sleeve rotates between opening and closing the aperture 27. Therefore a greater portion of each engine cycle is devoted to scavenging by compressed air than to the scavenging by fuel/air mixture and the delivery of such mixture for combustion. Since the engine speed and/or load are low sufficient fuel can be delivered to the cylinder even though the fuel/air mixture is delivered to the cylinder for only a small portion of each engine cycle.

Figures 2B to 6B shown the same cycle of events as figures 2A to 6A. However, the first member position does not correspond to that in figures 2A to 6A. The control system has acted to take account of high engine speed and/or load and has caused the servo motor to rotate the first member in a clockwise direction such that the leading edge of the sleeve transfer aperture 25 uncovers the first member charge transfer aperture 27 earlier in the cycle than in figures 2A to 6A. It is expected that this "charge" advancement could be of the order of 20^{o}. The angle through which the sleeve 2 rotates between opening and closing of the scavenge air aperture 26 is less than the angle it rotates between opening and closing aperture 27. Therefore fuel/air mixture is delivered to the cylinder 6 for a greater portion of each engine cycle with the first member 1 rotated as in Figures 2B to 6B than as rotated in Figures 2A to 2B.

At higher engine speeds and/or loads the time available for delivering sufficient fuel/air mixture to the cylinder 6 is less than at low engine speeds and/or loads and therefore it is necessary to devote a greater portion of each cycle at high speeds and/or loads to the delivery of fuel/air mixture. The control device 11 will map the signals of load and speed it receives from the sensors 12 and 12a on to a table of optimum rotational positions of the first member 1 stored in the memory.

The control device 11 will also control the rotation of the first member in accordance with engine temperature, as sensed by sensor 13. The control device will map the engine temperature signal onto the mapping table along with signals indicative of engine speed and load to determine by optimum rotation of the first member 1. Generally speaking the first member 1 will be rotated in accordance with engine temperature such that a greater portion of each engine cycle is devoted to the delivery of fuel/air mixture at lower engine temperatures than at high engine temperatures. Therefore a higher fuel/air ratio will be present in the cylinder 6 at low temperatures, reducing the energy required to propagate a flame.

A second embodiment of a two-stroke engine according to the invention is shown in Figures 7 and 8. The second embodiment is identical in most respects to the embodiment already described and the components will be referenced accordingly.

The additional feature of the second embodiment is the annular cavity 35. The compressed air is continuously introduced into the annular cavity 35. Fuel is injected into the airflow by injector 9. The sleeve 2 is rotating anti-clockwise as seen in figure 7 and therefore the flow of air from passage 34 is tangential to and in the same sense as the rotation of the sleeve. The rotating sleeve causes turbulence in the fuel/air mixture in the annular cavity 35 which improves mixing. Furthermore heat from combustion is transmitted along the sleeve 2 from the section where the sleeve 2 seals and opens the working cylinder 6 of the engine. The hot surface of the sleeve 2 aids evaporation of the fuel sprayed on to it by injector 9.

When the aperture 22 in the sleeve 2 aligns with the aperture 23 in the member 1 then the pressurised turbulent fuel/air mixture flows from the annular cavity 35 to the passage 31 to be delivered to the cylinder 6.

Whilst in the embodiments described above pressurised air is mixed with fuel before introduction into the cylinder the applicant envisages that exhaust gases could be mixed with fuel as well as air. The passage 34 would in such circumstances be connected via suitable pumping or impeller means to a portion of the exhaust passage combusted gases to supplement or replace a supply of air. The combusted gases will be hot and aid evaporation of the fuel. Furthermore emissions to atmosphere such as NOₓ emissions will be reduced by reusing the exhaust gas.

The benefits of the present invention are a potential reduction in exhaust emissions and fuel consumption due primarily to the "fresh air" scavenging but also in part by the partial "charge stratification". In addition, by introducing the scavenge air in the same direction as the mass flow of the exhaust gas ie. "uniflow scavenging", the energy required to scavenge the cylinder is potentially less than that required for a "loop" scavenged or "cross" scavenged cylinder and the time taken for the scavenging cycle is also potentially reduced. A further advantage of "uniflow scavenging" is due to the increasing of the "short circuiting" path, i.e. the distance of the charge entry point from the exhaust port. This increase will be reflected in improved idle and low speed/low load stability due to improved trapping and scavenging efficiencies.

The invention further provides a rotary valve for an internal combustion engine which may be easily controlled to vary the timing of the opening and closing of the valve apertures of a cylinder in accordance with varying engine parameters.

The specific embodiment described above makes reference to use of the invention in a two-stroke engine. Quite clearly the rotary valve of the invention could be used in any engine and need not necessarily be restricted to carrying fuel/air mixture and air under pressure to the cylinder. The rotary valve herein described could also be used to convey fuel/air mixture to and exhaust gases from a cylinder as mentioned in the prior art document EP 0112069.

## Claims

1. An internal combustion engine having:
at least one working cylinder (6),
an inlet port (24) in the cylinder and
inlet valve means connected to the inlet port comprising;
a first innermost member (1) of a cylindrical external configuration and having a plurality of fluid passages (30,31) therein and having a plurality of apertures (26,27) allowing communication of each of the fluid passages (30,31) with the exterior of the first member (1),
a sleeve (2) surrounding the first member (1) and having at least one aperture (25) and
means (4,5) for rotating the sleeve (2) relative to the first member (1) about a common axis, wherein
the aperture (25) of the sleeve (2) aligns with one or more of the apertures (26,27) of the first member (1) during a desired range of relative rotations to allow communication of a fluid passage (30,31) in the first member (1) with the working cylinder (6) via the inlet port (24), the sleeve (2) sealing the fluid passage (30,31) from the working cylinder (6) when the said apertures (30,31,25) are not in alignment
characterised in that means (18,10,11,12,13) is provided to rotate the first member (1) about the common axis.

2. An internal combustion engine as claimed in Claim 1 wherein rotation of the first member (1) about the common axis alters the timing of communication between the working cylinder (6) and the fluid passages (30,31) in the first member (1) of the inlet valve means.

3. An internal combusion engine as claimed in Claim 1 or Claim 2 wherein rotation of the first member (1) about the common axis alters the range of relative rotational positions between the sleeve (2) and the first member (1) during which the aperture (25) in the sleeve allows communication of each of the fluid passages (30, 31) in the first member (1) with the working cylinder (6).

4. An internal combustion engine as claimed in any one of the preceding claims further comprising measuring means (12) to measure engine speed wherein the means to rotate the first member (1) about the common axis rotates the first member (1) in accordance with engine speed.

5. An internal combustion engine as claimed in any one of the preceding claims further comprising measuring means (13) to measure engine temperature wherein the means to rotate the first member (1) about the common axis rotates the first member (1) in accordance with engine temperature.

6. An internal combustion engine as claimed in any of the preceding claims further comprising means (12a) to measure load on the engine wherein the means to rotate the first member (1) about the common axis rotates the first member (1) in accordance with engine load.

7. An internal combustion engine as claimed in any one of the preceding claims wherein the first member (1) and the sleeve (2) of the inlet valve means are located in a cavity defined in a cylinder head or cylinder block of the engine and an annular cavity (35) is defined between the exterior of the sleeve (2) and the cylinder head or cylinder block along a portion of the length of the sleeve (2), the sleeve (2) and the first member (1) having apertures (22,23) which align for a range of rotational positions of the sleeve (2) to allow communication between a fluid passage in the first member (1) and the annular cavity (35), and in which the annular cavity (35) communicates with means (9,34) for supplying fuel and gas mixture under pressure, whereby the fuel and gas mixture is mixed in the annular cavity (35) by turbulence caused by the rotation of the sleeve (2).

8. An internal combustion engine as claimed in claim 7 wherein the means for supplying fuel and gas mixture under pressure comprises a gas compressor and a fuel injector (9) injecting fuel into the gas.

9. An internal combustion engine as claimed in Claim 8 wherein the fuel injector (9) is positioned within the cylinder head or cylinder block such that it sprays fuel on to the sleeve of the inlet valve means.

10. An internal combustion engine as claimed in any one of the preceding claims which operates with a two-stroke cycle.

11. An internal combustion engine as claimed in any one of the preceding claims wherein gas and air mixture is delivered to the working cylinder (6) through a fluid passage (31) in the first member (1) when the associated aperture (27) in the first member (1) aligns with the aperture (25) in the sleeve (2).

12. An internal combustion engine as claimed in claim 11 wherein the gas and fuel mixture supplied to the working cylinder (6) is an air and fuel mixture.

13. An internal combustion engine as claimed in claim 11 wherein the gas and fuel mixture supplied to the working cylinder (6) is a mixture of fuel, air and combusted gases exhausted from the working cylinder (6).

14. An internal combustion engine as claimed in any one of the preceding claims wherein gas under pressure is delivered to the cylinder (6) through a fluid passage (30) in the first member (1) when the associated aperture (25) in the first member (1) aligns with an aperture (25) in the sleeve (2).

15. An internal combustion engine as claimed in claim 1 comprising:
means (8) for supplying gas under pressure,
means (8,9) for supplying a fuel and gas mixture,
exhaust valve means (28) which operates in timed relationship to the engine cycle to allow gases to flow out of the working cylinder (6) for a portion of the engine cycle, wherein
the inlet valve means operates in timed relationship to the engine cycle to connect the working cylinder (6) with the means (8) for supplying gas under pressure at a first point of the engine cycle and to connect the cylinder (6) with the means (8,9) for supplying fuel and gas mixture at a second later point in the engine cycle, and
the inlet valve means operates to connect the means (8) for supplying gas under pressure with the working cylinder (6) for at least a part of the period during which the exhaust valve means (28) allows gases to flow out of the working cylinder (6) such that gas under pressure supplied to the working cylinder (6) drives combusted gases from the working cylinder (6).

16. An internal combustion engine as claimed in claim 15 which operates by the two-stroke cycle and in which the exhaust valve means comprises an exhaust port (28) in the cylindrical wall of the working cylinder (6) spaced axially along the working cylinder from the inlet valve means, which exhaust port (28) is opened and closed by a piston (19) reciprocating in the cylinder (6).

17. An internal combustion engine as claimed in claim 15 or claim 16 wherein the inlet valve means supplies both the gas under pressure and the fuel and gas mixture to the cylinder (5) via a single port.

18. An internal combustion engine as claimed in any one of claims 15, 16 or 17 wherein the inlet valve means simultaneously supplies to the cylinder for a portion of the cycle of the engine both gas under pressure and fuel and gas mixture.

## Patentansprüche

1. Brennkraftmaschine mit
mindestens einem Arbeitszylinder (6),
einer Einlaßöffnung (24) in den Zylinder, und
einer mit der Einlaßöffnung verbundenen Einlaßventilanordnung, umfassend
ein erstes inneres Element (1) mit zylindrischer Außenform und einer Anzahl von Strömungskanälen (30,31) darin und einer Anzahl von Öffnungen (26,27), die die Kommunikation jedes der Strömungskanäle (30,31) mit dem Äußeren des ersten Elements (1) ermöglichen,
eine das erste Element (1) umgebende Hülse (2) mit mindestens einer Öffnung (25), und
Mittel (4,5) zum Drehen der Hülse (2) relativ zum ersten Element (1) um eine gemeinsame Achse, wobei
die Öffnung (25) der Hülse (2) über einen gewünschten Bereich der Relativdrehung mit einer oder mehreren der Öffnungen (26,27) des ersten Elements (21) fluchtet, um die Kommunikation eines Strömungskanals (30,31) in dem ersten Element (1) mit dem Arbeitszylinder (6) über die Einlaßöffnung (24) zu ermöglichen, wobei die Hülse (2) die Strömungskanäle (30,31) von dem Arbeitszylinder (6) abdichtet, wenn die Öffnungen (30,31) nicht fluchten,
dadurch **gekennzeichnet,** daß Mittel (18,10,11,12,13) zum Drehen des ersten Elements (1) um die gemeinsame Achse vorgesehen sind.

2. Brennkraftmaschine nach Anspruch 1, bei der die Drehung des ersten Elements (1) um die gemeinsame Achse den Zeitpunkt der Kommunikation zwischen dem Arbeitszylinder (6) und den Strömungskanälen (30,31) in dem ersten Element (1) der Einlaßventilanordnung ändert.

3. Brennkraftmaschine nach Anspruch 1 oder 2, bei der die Drehung des ersten Elements (1) um die gemeinsame Achse den Bereich von relativen Drehstellungen zwischen der Hülse (2) und dem ersten Element (1) ändert, in welchem die Öffnung (25) in der Hülse die Kommunikation jedes der Strömungskanäle (30,31) in dem ersten Element (1) mit dem Arbeitszylinder (6) ermöglicht.

4. Brennkraftmaschine nach einem der vorangehenden Ansprüche, die ferner eine Meßeinrichtung (12) zum Messen der Motordrehzahl aufweist, wobei die Mittel zum Drehen des ersten Elements (1) um die gemeinsame Achse das erste Element (1) in Abhängigkeit von der Motordrehzahl verdrehen.

5. Brennkraftmaschine nach einem der vorangehenden Ansprüche, die ferner eine Meßeinrichtung (13) zum Messen der Motortemperatur aufweist, wobei die Mittel zum Drehen des ersten Elements (1) um die gemeinsame Achse das erste Element (1) in Abhängigkeit von der Motortemperatur verdrehen.

6. Brennkraftmaschine nach einem der vorangehenden Ansprüche, die ferner Mittel (12a) zum Messen der auf den Motor wirkenden Last aufweist, wobei die Mittel zum Drehen des ersten Elements (1) um die gemeinsame Achse das erste Element (1) in Abhängigkeit von der Maschinenlast drehen.

7. Brennkraftmaschine nach einem der vorangehenden Ansprüche, wobei das erste Element (1) und die Hülse (2) der Einlaßventilanordnung in einem Hohlraum angeordnet sind, der in einen Zylinderkopf oder Zylinderblock der Maschine definiert ist, und daß ein ringförmiger Hohlraum (35) zwischen dem Äußeren der Hülse (2) und dem Zylinderkopf oder Zylinderblock längs eines Teils der Länge der Hülse (2) definiert ist, wobei die Hülse (2) und das erste Element (1) Öffnungen (22,23) haben, die über einen Bereich von Drehstellungen der Hülse (2) miteinander fluchten, um die Kommunikation zwischen einem Strömungskanal in dem ersten Element (1) und dem ringförmigen Hohlraum (35) zu ermöglichen, und wobei der ringförmige Hohlraum (35) mit Mitteln (9,34) zum Zuführen einer Brennstoff-Gasmischung unter Druck kommuniziert, so daß die Brennstoff-Gasmischung in dem ringförmigen Hohlraum (35) durch von der Drehung der Hülse (2) verursachte Turbulenz gemischt werden.

8. Brennkraftmaschine nach Anspruch 7, bei der die Einrichtung zum Zuführen von Brennstoff-Gasmischung unter Druck einen Gaskompressor und eine den Brennstoff in das Gas einspritzende Brennstoffeinspritzung (9) aufweisen.

9. Brennkraftmaschine nach Anspruch 8, bei der die Brennstoffeinspritzung (9) in dem Zylinderkopf oder Zylinderblock derart angeordnet ist, daß sie Brennstoff auf die Hülse der Einlaßventilanordnung spritzt.

10. Brennkraftmaschine nach einem der vorangehenden Ansprüche, die im Zweitaktbetrieb arbeitet.

11. Brennkraftmaschine nach einem der vorangehenden Ansprüche, bei der eine Gas- und Luftmischung dem Arbeitszylinder (6) durch einen Strömungskanal (31) in dem ersten Element (1) zugeführt wird, wenn die zugehörige Öffnung (27) in dem ersten Element (1) mit der Öffnung (25) in der Hülse (2) fluchtet.

12. Brennkraftmaschine nach Anspruch 11, bei der die dem Arbeitszylinder (6) zugeführte Gas- und Brennstoffmischung eine Luft- und Brennstoffmischung ist.

13. Brennkraftmaschine nach Anspruch 11, bei der die dem Arbeitszylinder (6) zugeführte Gas- und Brennstoffmischung eine Mischung aus Brennstoff, Luft und aus dem Arbeitszylinder (6) ausgestoßenen Verbrennungsgasen ist.

14. Brennkraftmaschine nach einem der vorangehenden Ansprüche, bei der ein Gas unter Druck den Zylinder (6) durch einen ersten Strömungskanal (30) in dem ersten Element (1) zugeführt wird, wenn die zugehörige Öffnung (25) in dem ersten Element (1) mit einer Öffnung (25) in der Hülse (2) fluchtet.

15. Brennkraftmaschine nach Anspruch 1, umfassend:
Mittel (8) zum Zuführen von Gas unter Druck,
Mittel (8,9) zum Zuführen einer Brennstoff- und Gasmischung,
eine Auslaßventilanordnung (28), die in zeitlicher Abstimmung zum Maschinentakt arbeitet, um das Ausströmen von Gasen aus dem Arbeitszylinder (6) während eines Teils des Maschinentaktes zu ermöglichen, wobei
die Einlaßventilanordnung in zeitlicher Abstimmung zu dem Maschinentakt derart arbeitet, daß sie den Arbeitszylinder (6) mit den Mitteln (8) zum Zuführen von Gas unter Druck an einem ersten Punkt des Maschinentaktes verbindet und daß sie den Zylinder (6) mit den Mitteln (8,9) zum Zuführen der Brennstoff- und Gasmischung an einem zweiten, späteren Punkt in dem Maschinentakt verbindet, und
wobei die Einlaßventilanordnung so arbeitet, daß sie die Mittel (8) zum Zuführen von Gas unter Druck während mindestens eines Teils des Zeitintervalls verbindet, in dem die Auslaßventilanordnung (28) das Ausströmen von Gasen aus dem Arbeitszylinder (6) ermöglicht derart, daß dem Arbeitszylinder (6) unter Druck zugeführtes Gas die Verbrennungsgase aus dem Arbeitszylinder (6) austreibt.

16. Brenntaktmaschine nach Anspruch 15, die im Zweitaktbetrieb arbeitet und bei der die Auslaßventilanordnung eine Auslaßöffnung (28) in der zylindrischen Wand des Arbeitszylinders (6) aufweist, die in Axialrichtung des Arbeitszylinders im Abstand von der Einlaßventilanordnung angeordnet ist, wobei die Auslaßöffnung (28) durch einen in dem Zylinder (6) hin- und hergehenden Kolben (19) geöffnet und geschlossen wird.

17. Brennkraftmaschine nach Anspruch 15 oder 16, bei der die Einlaßventilanordnung sowohl das Gas unter Druck als auch die Brennstoff- und Gasmischung dem Zylinder (6) über eine einzige Öffnung zuführt.

18. Brennkraftmaschine nach einem der Ansprüche 15, 16 oder 17, bei der die Einlaßventilanordnung während eines Teiles des Maschinentaktes dem Zylinder gleichzeitig sowohl Gas unter Druck als auch Brennstoff- und Gasmischung zuführt.

## Revendications

1. Moteur à combustion interne comportant :
au moins un cylindre de travail (6),
un orifice d'admission (24) dans le cylindre et
un moyen de soupape d'admission relié à l'orifice d'admission comprenant :
un premier organe interne (1) d'une configuration externe cylindrique et comportant une pluralité de passages de fluide (30, 31) en son sein et comportant une pluralité d'ouvertures (26, 27) permettant la communication de chacun des passages de fluide (30, 31) avec l'extérieur du premier organe (1),
un manchon (2) entourant le premier organe (1) et comportant au moins une ouverture (25) et
un moyen (4, 5) pour faire tourner le manchon (2) relativement au premier organe (1) autour d'un axe commun, dans lequel
l'ouverture (25) du manchon (2) s'aligne avec une ou plusieurs des ouvertures (26, 27) du premier organe (1) sur une plage souhaitée de rotations relatives pour permettre la communication d'un passage de fluide (30, 31) dans le premier organe (1) avec le cylindre de travail (6) va l'orifice d'admission (24), le manchon (2) obturant hermétiquement le passage de fluide (30, 31) depuis le cylindre de travail (6) lorsque lesdites ouvertures (30, 31, 25) ne sont pas alignées
caractérisé en ce qu'un moyen (18, 10, 11, 12, 13) est prévu pour faire tourner le premier organe (1) autour de l'axe commun.

2. Moteur à combustion interne selon la revendication 1, dans lequel la rotation du premier organe (1) autour de l'axe commun modifie la durée de communication entre le cylindre de travail (6) et les passages de fluide (30, 31) dans le premier organe (1) du moyen de soupape d'admission.

3. Moteur à combustion interne selon la revendication 1 ou 2, dans lequel la rotation du premier organe (1) autour de l'axe commun modifie la plage de positions de rotation relatives entre le manchon (2) et le premier organe (1) sur laquelle l'ouverture (25) dans le manchon permet la communication de chacun des passages de fluide (30, 31) dans le premier organe (1) avec le cylindre de travail (6).

4. Moteur à combustion interne selon l'une quelconque des revendications précédentes, comprenant en outre un moyen de mesure (12) pour mesurer la vitesse du moteur, dans lequel le moyen pour faire tourner le premier organe (1) autour de l'axe commun fait tourner le premier organe (1) en fonction de la vitesse du moteur.

5. Moteur à combustion interne selon l'une quelconque des revendications précédentes, comprenant en outre un moyen de mesure (13) pour mesurer la température du moteur, dans lequel le moyen pour faire tourner le premier organe (1) autour de l'axe commun fait tourner le premier organe (1) en fonction de la température du moteur.

6. Moteur à combustion interne selon l'une quelconque des revendications précédentes, comprenant en outre un moyen (12a) pour mesurer la charge sur le moteur, dans lequel le moyen pour faire tourner le premier organe (1) autour de l'axe commun fait tourner le premier organe (1) en fonction de la charge sur le moteur.

7. Moteur à combustion interne selon l'une quelconque des revendications précédentes, dans lequel le premier organe (1) et le manchon (2) du moyen de soupape d'admission sont situés dans une cavité ménagée dans une culasse ou un bloc de cylindre du moteur et une cavité annulaire (35) est ménagée entre l'extérieur du manchon (2) et la culasse ou le bloc de cylindre le long d'une portion de la longueur du manchon (2), le manchon (2) et le premier organe (1) comportant des ouvertures (22, 23) qui s'alignent sur une plage de positions de rotation du manchon (2) pour permettre la communication entre un passage de fluide dans le premier organe (1) et la cavité annulaire (35), et dans lequel la cavité annulaire (35) communique avec un moyen (9, 34) d'alimentation en mélange gaz-carburant sous pression, de sorte que le mélange gaz-carburant soit mélangé dans la cavité annulaire (35) par turbulence provoquée par la rotation du manchon (2).

8. Moteur à combustion interne selon la revendication 7, dans lequel le moyen d'alimentation en mélange gaz-carburant sous pression comprend un compresseur à gaz et un injecteur de carburant (9) injectant le carburant dans le gaz.

9. Moteur à combustion interne selon la revendication 8, dans lequel l'injecteur de carburant (9) est positionné au sein de la culasse ou du bloc de cylindre de manière qu'il atomise le carburant sur le manchon du moyen de soupape d'admission.

10. Moteur à combustion interne selon l'une quelconque des revendications précédentes, qui fonctionne avec un cycle à deux temps.

11. Moteur à combustion interne selon l'une quelconque des revendications précédentes, dans lequel le mélange gaz-carburant est distribué au cylindre de travail (6) via un passage de fluide (31) dans le premier organe (1) lorsque l'ouverture associée (27) dans le premier organe (1) s'aligne avec l'ouverture (25) dans le manchon (2).

12. Moteur à combustion interne selon la revendication 11, dans lequel le mélange gaz-carburant distribué au cylindre de travail (6) est un mélange air-carburant.

13. Moteur à combustion interne selon la revendication 11, dans lequel le mélange gaz-carburant distribué au cylindre de travail (6) est un mélange de carburant, d'air et de gaz de combustion expulsés du cylindre de travail (6).

14. Moteur à combustion interne selon l'une quelconque des revendications précédentes, dans lequel le gaz sous pression est distribué au cylindre (6) via un passage de fluide (30) dans le premier organe (1) lorsque l'ouverture associée (25) dans le premier organe (1) s'aligne avec une ouverture (25) dans le manchon (2).

15. Moteur à combustion interne selon la revendication 1, comprenant :
un moyen (8) pour distribuer un gaz sous pression,
un moyen (8, 9) pour distribuer un mélange gaz-carburant,
un moyen de soupape d'échappement (28) qui fonctionne en synchronisation avec le cycle du moteur pour permettre aux gaz de s'échapper du cylindre de travail (6) pendant une portion du cycle du moteur, dans lequel
le moyen de soupape d'admission fonctionne en synchronisation avec le cycle du moteur pour relier le cylindre de travail (6) avec le moyen (8) pour distribuer le gaz sous pression en un premier point du cycle du moteur et pour relier le cylindre (6) avec le moyen (8, 9) pour distribuer le mélange gaz-carburant en un second point, ultérieur, du cycle du moteur, et
le moyen de soupape d'admission a pour fonction de relier le moyen (8) pour distribuer le gaz sous pression avec le cylindre de travail (6) pendant au moins une partie de la période durant laquelle le moyen de soupape d'échappement (28) permet aux gaz de s'échapper du cylindre de travail (6) de manière que le gaz sous pression distribué au cylindre de travail (6) entraîne les gaz de combustion depuis le cylindre de travail (6).

16. Moteur à combustion interne selon la revendication 15, qui fonctionne avec un cycle à deux temps et dans lequel le moyen de soupape d'échappement comprend un orifice d'échappement (28) dans la paroi cylindrique du cylindre de travail (6) espacé axialement le long du cylindre de travail du moyen de soupape d'admission, lequel orifice d'échappement (28) est ouvert et fermé par un piston (19) allant et venant dans le cylindre (6).

17. Moteur à combustion interne selon la revendication 15 ou 16, dans lequel le moyen de soupape d'admission distribue à la fois le gaz sous pression et le mélange gaz-carburant au cylindre (6) via un seul orifice.

18. Moteur à combustion interne selon l'une quelconque des revendications 15, 16 ou 17, dans lequel le moyen de soupape d'admission distribue simultanément au cylindre pendant une porton du cycle du moteur à la fois le gaz sous pression et le mélange gaz-carburant.
